# EUROPEAN PATENT APPLICATION

(11) **EP 0 735 051 A1**
(43) Date of publication of application: **02.10.1996**
(21) Application number: 96302251.2
(22) Date of filing: 29.03.1996
(51) Int. Cl.: C08F 2/06

(54) **Stable free polymerization under supercritical conditions and polymers produced thereby**

(30) Priority: 30.03.1995 US 413752
(71) Applicant: XEROX CORPORATION, Rochester New York 14644 (US)
(72) Inventor: Odell, Peter G., Mississauga, Ontario (CA); Hamer, Gordon K., Mississauga, Ontario L5L 2P4 (CA); Georges, Michael K., Guelph, Ontario N1G 3N8 (CA)
(74) Representative: Reynolds, Julian David

(57) **Abstract**

A free radical polymerization process for the preparation of a thermoplastic resin or resins under supercritical conditions includes heating a mixture of a free radical initiator, a stable free radical agent, and at least one polymerizable monomer compound; adding under pressure a supercritical fluid; polymerizing the polymerizable monomer or monomers to form a thermoplastic resin or resins with a high monomer to polymer conversion; cooling the mixture; and optionally isolating, washing and drying the thermoplastic resin or resins.

## Description

Of the known polymerization processes a preferred way to prepare polymers or copolymers having a narrow molecular weight distribution or polydispersity is by anionic processes. The use and availability of resins having narrow polydispersities in industrial applications is limited because anionic polymerization processes must be performed in the absence of atmospheric oxygen and moisture, require difficult to handle and hazardous initiator reagents and consequently such polymerization processes are generally limited to small batch reactors. In addition, the monomers and solvents that are used must be anhydrous and of high purity, rendering the anionic process more expensive than alternatives that do not have these requirements. Thus, anionic polymerization processes are difficult and costly. It is desirable to have a free radical polymerization process that would provide narrow molecular weight distribution resins that overcome the shortcomings and disadvantages of the aforementioned anionic polymerization processes.

Free radical polymerization processes are chemically less sensitive to impurities in the monomers or solvents typically used, and are completely insensitive to water. There has been a long felt need for an economical free radical polymerization process that is suitable for preparing narrow polydispersity resins by suspension, solution, bulk or neat, emulsion and related polymerization processes.

Copolymers prepared by free radical polymerization processes inherently have broad molecular weight distributions or polydispersities, generally greater than about two or three. One reason is that free radical initiators have half-lives that are relatively long, from several minutes to many hours, and polymeric chains are not all initiated at the same time. Furthermore, the initiators provide growing chains of various lengths at any given time during the polymerization process. Also, the propagating chains in a free radical process can react with each other in processes known as coupling and disproportionation reactions, both of which are chain terminating reactions. In doing so, chains of varying lengths are terminated at different times during the reaction process, which results in resins comprised of polymeric chains that vary widely in length from very small to very large. If a free radical polymerization process is to be enabled for producing narrow molecular weight distributions, then all polymer chains must be initiated at about the same time and premature termination by coupling or disproportionation processes must be avoided.

Stable free radicals are well known as inhibitors of free radical polymerizations, see for example, G. Moad et.al., Polymer Bulletin 6, 589 (1982). Studies by, for example, G. Moad et.al., J.Macromol. Sci.-Chem., A17(1), 51 (1982) have reported on the use of stable free radicals as inhibitors of free radical polymerizations performed at low temperatures, for example, below 90°C and at low monomer to polymer conversions. Little is known concerning the reaction of stable free radical agents at higher temperatures and at high monomer to polymer conversions, except for example as illustrated in US-A-5,322,912.

US-A-4,581,429 discloses a free radical polymerization process that controls the growth of polymer chains to produce short chain or oligomeric homopolymers and copolymers including block and graft copolymers. The process employs an initiator having the formula (in part) =N-O-X, where X is a free radical species capable of polymerizing unsaturated monomers. The molecular weights of the polymer products obtained are generally from about 2,500 to 7,000, with polydispersities generally of from about 1.4 to 1.8, at low monomer to polymer conversion. The reactions typically have low conversion rates and use relatively low reaction temperatures of less than about 100°C, and use multiple stages.

US-A-5,059,657 discloses a polymerization process for acrylic and maleimide monomers by contacting the monomers with a diazotate, cyanate or hyponitrite, and N-chlorosuccinimide, N-bromosuccinimide or a diazonium salt. The polymer produced can initiate further polymerization, including use in block copolymer formation.

In free radical polymerization reaction processes of the prior art, various significant problems exist, for example difficulties in predicting or controlling the polydispersity and modality of the polymers produced. Such free radical polymerization processes produce polymers with high weight average molecular weights (M_{w}) and low number average molecular weights (Mₙ), resulting in broad polydispersities. Further, bulk or neat free radical polymerization processes of the prior art are prone to generating excessive quantities of heat since the polymerization reaction is exothermic and dissipation of heat becomes more difficult as the viscosity of the reaction medium increases. This is referred to as the Trommsdorff effect, as discussed and illustrated in Principles of Polymerization, G.Odian, 2nd Ed., Wiley-Interscience, N.Y., 1981, page 272, the disclosure of which is entirely incorporated herein by reference. Moreover, the exothermic nature of free radical polymerization processes is often a limitation that severely restricts the concentration of reactants or the reactor size upon scale up.

It is known to form resins by bead suspension polymerization, for example as described in US-A-4,601,968 and US-A-4,609,607.

Illustrated in US-A-5,274,057 is that free radical suspension polymerization reactions may also lead to undesirable deposits of polymer on the agitator, baffles, heating coils and reactor walls. In some situations, the suspension coalesces during the reaction, thus producing large deposits of undesirable polymeric gel material that is difficult, expensive and hazardous to remove from the reactor.

Further, gel body formation in conventional free radical polymerization processes may result in a broad molecular weight distributions and/or difficulties encountered during filtering, drying and manipulating the product resin.

These and other disadvantages are avoided, or minimized, with the processes of the present invention.

The present invention provides processes and polymers that overcome many of the problems and disadvantages of the aforementioned prior art. It provides a free radical polymerization reaction system that affords narrow polydispersity homopolymeric or copolymeric thermoplastic resin products. In the invention, a supercritical fluid such as carbon dioxide is selected as a replacement for a solvent.

The present invention provides a free radical polymerisation process according to claims 1, 9 and 10 of the appended claims.

Preferably, the stable free radical agent to free radical initiator molar ratio is from about 0.4 to about 2.5, and more preferably from about 0.9 to about 1.8.

Preferably, the monomer to free radical initiator molar ratio is from about 100:1 to about 10,000:1.

The monomer to polymer conversion is preferably at least 90 percent by weight. Preferably the polymerizable monomer compound is selected from the group consisting of styrene and derivatives thereof, conjugated dienes and derivatives thereof, acrylates and derivatives thereof, and mixtures thereof.

Preferably, the weight average molecular weight (Mw) of the thermoplastic resin is from about 10,000 to about 200,000.

Preferably, the thermoplastic resin or resins has a polydispersity of from about 1.1 to about 2.0 and a monomer to polymer conversion of from about 50 to about 90 percent.

The free radical polymerization reaction system may be conducted in the presence or absence of conventional reaction media. The swollen polymer with the supercritical medium has characteristics similar to a low viscosity liquid; for example the swollen polymer can be easily stirred and remains in the reaction vessel bottom, and after release of the pressure the resulting polymer melt moves up the agitator. Moreover, the purity of the polymer product with a supercritical fluid such as carbon dioxide as a solvent/dispersant avoids or minimizes contamination, and throughput and product yield are high, for example up to about 99 percent. Additionally, the processes of the present invention permit a single pot synthesis of a block copolymer.

Coupling or disproportionation termination reactions may be prevented by reversibly terminating the propagating free radical chains with a stable free radical agent that serves to moderate the free radical polymerization process.

Acceleration of the dissociation of the free radical peroxide initiator may be provided by the addition of promoter compounds that include, for example, tertiary amines, which ensure that all polymeric chains are initiated nearly simultaneously or at about the same time.

Small amounts of organic acids, for example, sulfonic, phosphoric or carboxylic acids, may be added to the reaction medium to increase the rate of reaction without broadening the polydispersity of the polymeric resins.

In embodiments, thermoplastic resins may be prepared by single pot processes employing a monomer or monomers, a suitable azo or peroxide free radical initiator, and a stable free radical agent.

The invention provides methods to prepare resins using polymerization processes wherein the molecular weight of the growing copolymer chains increases over the entire time period of the polymerization reaction and wherein the percent conversion or degree of polymerization of monomer to polymer with respect to time or number average molecular weight is approximately linear. That is, the polymerization processes occur without the aforementioned Trommsdorff effect.

The polymerization processes and thermoplastic resin products of the instant invention are useful in many applications, for example, as a variety of specialty applications including toner resins used for electrophotographic imaging processes or where monomodal or mixtures of monomodal narrow molecular weight resins or block copolymers with narrow molecular weight distribution within each block component are suitable, such as in thermoplastic films and coating technologies.

In embodiments, the present invention overcomes the problems and disadvantages of the prior art by forming narrow polydispersity polymeric resins by, for example, a free radical polymerization process comprising heating a mixture of a free radical initiator, a stable free radical agent, and at least one polymerizable monomer compound to form thermoplastic resin or resins with a high monomer to polymer conversion; cooling the mixture; optionally isolating said thermoplastic resin or resins; and optionally washing and drying the thermoplastic resin or resins, and wherein the thermoplastic resin or resins possess a narrow polydispersity, and wherein the process is accomplished in the presence of a supercritical fluid such as carbon dioxide.

As used herein, the term "supercritical" is used in its traditional sense to refer to a dense gas that is maintained above its critical temperature, i.e., is maintained at a temperature above which the gas cannot be liquefied by the application of any amount of pressure. For example, carbon dioxide has a critical temperature of about 31°C. Thus, carbon dioxide maintained at a temperature at or above the critical temperature of about 31°C cannot be converted into a liquid by increasing the pressure, and is therefore referred to as a supercritical fluid.

The present invention relates to processes for the preparation of polymers, and more specifically to a polymerization process and to the polymer formed thereby. In embodiments, the present invention relates to a stable free radical process for generating a thermoplastic polymer resin or resins, that have narrow polydispersities, that is, narrow molecular weight distributions as defined by the ratio M_{w}:Mₙ, where M_{w} is weight average molecular weight and Mₙ is number average molecular weight, and easily controllable modality, from at least one monomer compound. The process comprises heating for an effective period of time a mixture of a free radical initiator, a stable free radical agent, and at least one polymerizable monomer compound under conditions such that all polymer chain formations are initiated at about the same time; cooling the mixture to effectively terminate the polymerization; isolating the thermoplastic resin product; and optionally washing and drying the polymer resins, and wherein the aforementioned process is accomplished in the presence of a supercritical medium, such as carbon dioxide. In embodiments of the present invention bulk polymerization is selected under stable free radical conditions as indicated herein, and wherein the bulk phase is under supercritical conditions, and the polymer phase is swollen with the supercritical fluid. The polymer resins produced by the process of the present invention in embodiments are essentially monomodal and in embodiments by repeating the heating step, that is, the combined initiation and polymerization step, there can be enabled mixtures of monomodal polymer resins, that are compositionally the same resin type having characteristics of both narrow polydispersity and known or selectable modality.

In embodiments the process of the present invention enables bulk or neat free radical polymerization processes on multikilogram or larger scales. The aforementioned embodiments may be accomplished in a one or single pot reactor environment. In another embodiment polymeric chain growth proceeds by a pseudoliving mechanism and can provide resins of variable molecular weights from very low to very high, for example, from less than about 10,000 up to about 300,000 while maintaining narrow molecular weight distributions or polydispersities. In another embodiment block copolymers can be synthesized by the aforementioned stable free radical moderated free radical polymerization processes wherein each block formed is well defined in length by the reacted monomer and wherein each block formed possesses a narrow molecular weight distribution.

Another embodiment of the present invention is the provision of a free radical polymerization process for the preparation of thermoplastic resins comprising heating a first mixture comprised of a free radical initiator, a stable free radical agent, and at least one polymerizable monomer compound to form a first intermediate product resin; optionally cooling the first mixture; adding to the first intermediate product resin a second mixture comprised of a free radical initiator, a stable free radical agent, and at least one polymerizable monomer compound, wherein the polymerizable monomer compound of the second mixture is the same as the polymerizable monomer compound of the first mixture, and the free radical initiator and the stable free radical agent of the second mixture are the same or different from the free radical initiator and the stable free radical agent of the first mixture, to form a combined mixture; heating the combined mixture to form a third mixture comprised of a mixture of thermoplastic resins comprised of a first product resin formed from the first intermediate product resin and the added second monomer, and a second product resin formed from the second monomer; cooling the third mixture; optionally isolating the mixture of thermoplastic product resins from the third mixture; and optionally washing and drying the mixture of thermoplastic resins; wherein the first product resin and the second product resin each possess a narrow polydispersity and the mixture of thermoplastic resins possesses a modality equal to 2, and wherein the aforementioned reactions are accomplished in the presence of a supercritical fluid such as carbon dioxide. Higher modalities, for example, of from about 3 to about 20 may be conveniently achieved if desired by the subsequent addition of fresh mixtures of monomer, free radical initiator and stable free radical agent prior to a final cooling and isolation step.

In another embodiment of the instant invention there is provided a free radical polymerization process for the preparation of a block copolymer thermoplastic resin or resins comprising heating a first mixture comprised of a free radical initiator, a stable free radical agent, and at least one polymerizable monomer compound to form a first intermediate product resin; optionally cooling the first mixture; optionally isolating the first intermediate product resin; adding to the first intermediate product resin a second mixture comprised of at least one polymerizable monomer compound, wherein the polymerizable monomer compound of the second mixture is different from the polymerizable monomer compound of the first mixture, to form a combined mixture; heating the combined mixture to form a third mixture comprised of a block copolymer thermoplastic resin comprised of a first product resin formed from the first intermediate product resin and the added second monomer; cooling the third mixture; optionally isolating the block copolymer thermoplastic resin from the third mixture; and optionally washing and drying the block copolymer thermoplastic resin; wherein the block copolymer possesses a narrow polydispersity and a modality equal to 1, and wherein the aforementioned reactions are accomplished in the presence of a supercritical fluid such as carbon dioxide. The isolation of the intermediate product resin is preferred when highest purity and block integrity or homogeneity is desired. That is, isolation of the intermediate product may be preferred when residual unreacted monomer or monomers of the first mixture may subsequently react with and be integrated into the growing polymer chain formed from the second mixture of polymerizable monomer compounds. Thus, in preparing block copolymers by processes of the instant invention isolation by, for example, precipitation of intermediate products of the polymerization reactions is preferred when high purity is desired or when the degree of polymerization is less than about 70 to 90 percent for a block or multiblock polymerization reaction.

A particular advantage of the present invention is that the residual monomer of the first block may be removed by supercritical extraction without the need for isolation and precipitation. That is, all of the remaining nonreacted monomer from the polymerization of the first block may be removed from the reactor vessel, for example, prior to introducing a second polymerizable monomer. In fact, the extraction can be performed at the reaction temperature so that residual monomer levels can be reduced by simultaneously continuing polymerization and extraction prior to the addition of the polymerizable monomer for the second block.

In embodiments of the aforementioned processes, polymer or copolymer resin compositions may be obtained wherein the resin or resins has a weight average molecular weight (M_{w}) of from about 10,000 to about 200,000, a number average molecular weight (Mₙ) of from about 9,000 to about 100,000 and a polydispersity of from about 1.1 to about 2.0.

Although not being desired to be limited by theory, it is believed that when polymerization reaction processes of the instant invention are performed at a temperature at about or above 100°C, the exact temperature depending on the initiator used, all of the polymer chains are expected to be initiated at about the same time. This is believed to be a primary reason for enabling forming polymer chain products having narrow polydispersities.

Propagating chains of the present invention are referred to as "pseudo-living" because the stable free radical agent adds to a propagating chain and the chain is temporarily, but reversibly, terminated. As shown in the following general reaction scheme, the propagating polymer chain fluctuates or is in an equilibrium condition between being temporarily terminated or suspended and being alive or living. As thermal energy is supplied from the reaction system to the bond joining the growing polymeric chain and the stable free radical (•SFR) agent, that is, the adduct in the accompanying scheme where, for example, the stable free radical agent (•SFR) is covalently bound to the propagating chain, for example, a substituted styrene, homolytically cleaves thereby temporarily generating a living chain end radical species shown in square brackets [] permitting another monomer unit to insert or add to the chain and is again instantaneously, albeit short lived as determined by diffusion control, terminated or protected by the stable free radical agent as a thermally labile adduct above about 80° to 100° C or latent free radical chain. The free radical initiator, for example, benzoyl peroxide, is represented in the scheme as •INIT.

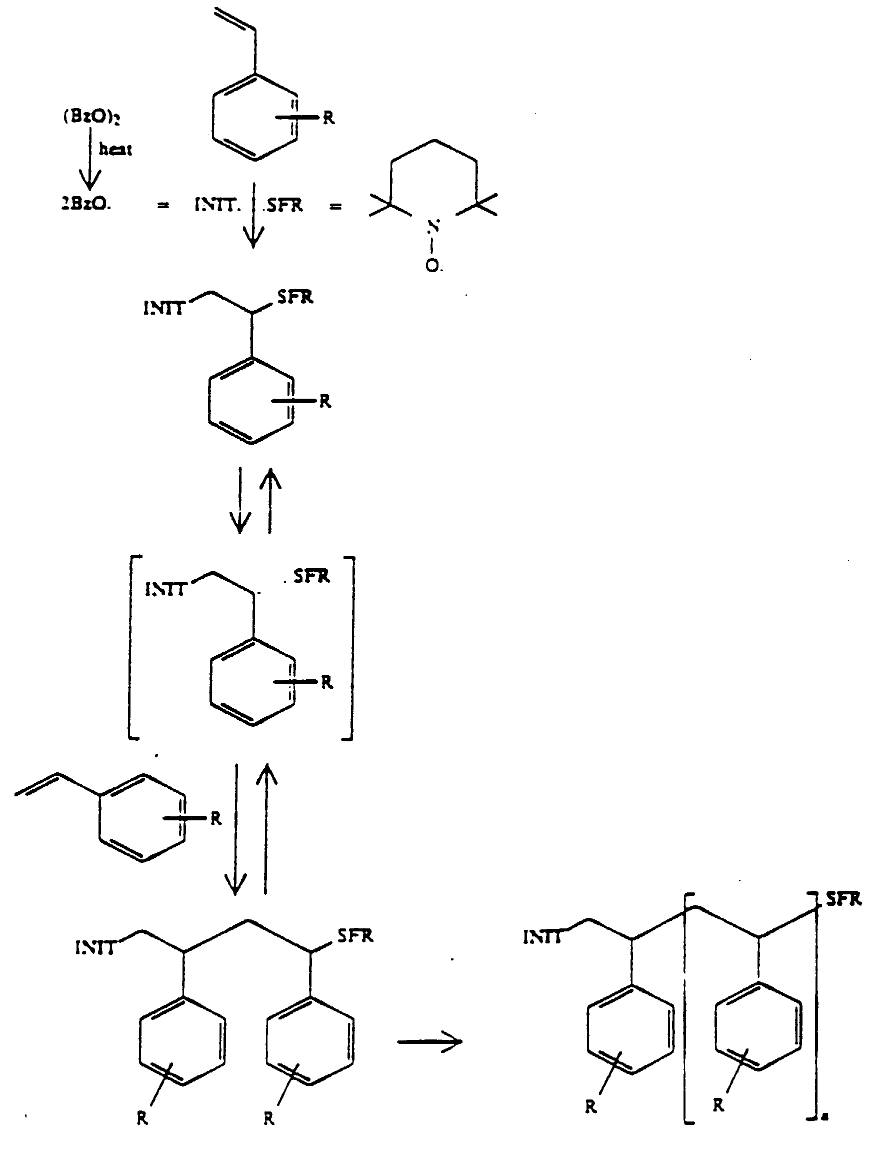

More specifically, the polymerization process of the present invention comprises conducting the stable free radical polymerization process described herein in the presence of a supercritical fluid. Accordingly, where bulk polymerization of the selected monomer or monomers occurs, the bulk phase may generally be in the supercritical phase, and the polymer phase may be swollen by the supercritical fluid medium. A benefit of the supercritical fluid, in embodiments, is that the polymer phase, which is swollen by the supercritical fluid, resembles more a low viscosity liquid, rather than a high viscosity polymer. Thus processing of the polymerization medium such as stirring and transporting is much improved, thereby providing a more efficient and cost-effective process.

In the present invention, any of a variety of supercritical fluids may be used as the processing medium, as long as they satisfy the reaction criteria described above. Examples of suitable supercritical fluids include, but are not limited to, carbon dioxide, nitrous oxide, low molecular weight alkanes such as methane, ethane, propane, and butane, mixtures thereof and the like. In the processes of the present invention, carbon dioxide is preferred as the supercritical fluid.

During the polymerization process, it is preferred that the temperature and pressure of the reactor vessel be maintained at such levels as to preserve the supercritical fluid in its supercritical state. Thus, in embodiments, the pressure in the reactor vessel is preferably maintained at a level of from about 1,000 psi to about 6,000 psi, more preferably from about 1,500 psi to about 5,000 psi. Even more preferably, the reactor is maintained at a pressure of from about 2,000 psi to about 4,000 psi. Such pressures may vary, of course, depending upon the specific supercritical fluid being used, the reactor equipment, and the polymerization reaction temperatures.

Generally, in embodiments of the present invention, the reactor vessel is heated to the desired reaction temperature prior to pressurization and introduction of the polymerization reagents (such as monomer or monomers, initiator, stable free radical agent, etc.). The pre-heating of the reactor vessel may be preferred, for example, to prevent dangerous overpressures from occurring as the otherwise-pressurized reactor is heated to the reaction temperatures. Thus, for example, the reactor vessel of the present invention may be heated to the reaction temperatures of from about 60°C to about 160°C prior to adding the supercritical fluid to obtain the reactor pressure of from about 1,000 psi to about 6,000 psi. Once the reactor vessel is heated and pressurized to the desired reaction conditions, the polymerization reagents may be introduced to the reactor vessel, and the polymerization commenced.

However, as will be recognized based on the instant disclosure, the order of heating the reactor vessel, pressuring the reactor vessel with the supercritical fluid, and introducing the polymerization reagents into the reactor vessel is not of particular importance. Thus, in embodiments, it may be desirable to add all of the reaction components into the reactor at the same time, seal the reactor, and heat it to reaction conditions.

In embodiments, it is possible and may be desirable to maintain constant or intermittent stirring of the reaction components within the reactor vessel. Any of the known methods of stirring the reaction components may be utilized.

During the reaction of monomer or mixed monomers to form polymers, the reaction time may be varied over from about 1 to about 60 hours, preferably between from about 2 to about 10 hours and optimally from about 4 to about 7 hours. The optimal reaction time may vary depending upon the temperature, the volume and scale of the reaction, and the quantity and type of polymerization initiator and stable free radical agent selected.

The polymerization reaction temperature is kept relatively constant throughout the heating step by providing an adjustable external heat source. The temperature is maintained at from about 60°C to about 160°C, and preferably between about 100°C and about 150°C, and optimally in embodiments from about 120°C to about 140°C. Reactions performed above about 160°C tend to result in a broadening of the polydispersity. A reaction volume may be selected for any size that enables simple adding, mixing, reacting and isolating the product resins on an economic or convenient scale.

The free radical initiator can be any free radical polymerization initiator capable of initiating a free radical polymerization process and includes peroxide initiators such as benzoyl peroxide and azo initiators such as azobisisobutyronitrile, and the like. The initiator concentration employed may generally be from about 0.2 to about 2.5 weight percent, of the total weight of monomer to be polymerized and is determined by the desired molecular weight of the resin. As the initiator concentration is decreased relative to the weight of molar equivalents of monomer used, the molecular weight of the thermoplastic resin product increases.

The stable free radical agent can be any stable free radical and includes nitroxide free radicals, for example, PROXYL (2,2,5,5-tetramethyl-1-pyrrolidinyloxy) and derivatives thereof, TEMPO (2,2,6,6-tetramethyl-1-piperidinyloxy) and derivatives thereof, DOXYL (4,4-dimethy-1-oxazolidinyloxy) and derivatives thereof, mixtures thereof, and the like. These stable free radical agent materials are well known in the literature as free radical polymerization inhibitors, for example as described in G. Moad et.al., Tetrahedron Letters, 22, 1165 (1981). However, under the polymerization conditions of the instant invention the stable free radical agents function as moderators to harness the normally highly reactive and indiscriminate intermediate free radical species.

The molar ratio of the stable free radical (SFR) agent to free radical initiator (INIT) may generally be from about 0.4 to about 2.5, and preferably in the range of from about 0.9 to 1.6. Although not wanting to be limited by theory, in an embodiment, the molar ratio [SFR:INIT] of stable free radical agent, for example, TEMPO, to free radical initiator, for example, benzoyl peroxide, of from about 1.1 to about 1.3 is believed to be especially preferred. If the [SFR:INIT] is too high then the reaction rate is noticeably inhibited. If the [SFR:INIT] is too low then the reaction product has undesired increased polydispersity. It should be noted that when styrene is polymerized to polystyrene without the stable free radical agent of the instant process, the product polymers isolated have polydispersities of 2.0 and above.

In embodiments, the molar ratio of monomer content to stable free radical agent to free radical initiator may generally be from about 100:0.2:1 to about 10,000:2.5:1 and preferably in the range of from about 300:1.3:1 to about 7,000:1.3:1.

Processes of the instant invention, in embodiments, provide for high monomer to polymer conversion rates, or degrees of polymerization, for example of about 90 percent by weight or greater.

Processes of the instant invention, in embodiments, provide for relatively high weight average molecular weights, for example weight average molecular weights ranging in size of from about 10,000 to about 200,000.

The monomers that can be used in the processes of the present invention are any monomers capable of undergoing a free radical polymerization and include, but are not limited to, styrene, substituted styrenes and derivatives thereof, for example methylstyrene, acrylates, methacrylates, butadiene and any conjugated diene monomer sufficiently reactive under the specified stable free radical moderated polymerization reaction conditions to afford a stable free radical reaction adduct and high molecular weight polymer product, for example, isoprene and myrcene.

The polymerization reaction rate of the monomers may, in embodiments, be accelerated and the reaction time reduced to from about 4 to about 7 hours from greater than 16 hours by the addition of a catalytic amount of a protic acid, that will not also initiate cationic polymerization, selected from the group consisting of organic sulfonic, phosphoric and carboxylic acids, where camphorsulfonic acid is a preferred acid. When incorporated into the reaction, the molar ratio of stable free radical agent to acid is from about 1:1 to 11:1, with a preferred ratio of between about 1.5:1 and about 5:1. Excessive addition of organic acid beyond the aforementioned amounts may cause the resin polydispersity to broaden.

The stable free radical moderated polymerization process of the instant invention may be repeated a number of times within the same reaction vessel by the delayed and stepwise addition of more monomer or monomers with varying amounts of initiator and stable free radical agent to form a mixture of monomodal resins where each component has a distinct molecular weight and has a narrow molecular weight distribution. In such a process, it is preferred that each of the polymerization reaction steps be conducted in the presence of a supercritical fluid and under the reaction conditions as described above. The result will be a mixture having a modality of N+1, where N represents the number of additional times that monomer, initiator and stable free radical agent are added.

By cooling the polymerization reaction to below about 60 to 80°C, the stable free radical moderated reaction may in embodiments be effectively quenched or terminated. Each new or subsequent addition of monomer, stable free radical agent and initiator accompanied by heating with the supercritical fluid may provide a new polymeric species having a narrow molecular weight distribution. Each new polymer species produced thereby may continue to grow independent of the other polymer species already established.

Alternatively, block copolymer resins may also be prepared whereby after each desired block has been formed, a new monomer or monomers is added without the addition of more initiator or stable free radical agent to form a new block. In such a process, it is preferred that each of the polymerization reaction steps be conducted in the presence of a supercritical fluid and under the reaction conditions as described above The result is that each block component is well defined in length and has a narrow molecular weight distribution and having properties depending on the repeated sequence and the monomers chosen for incorporation.

Additional optional known additives may be used in the polymerization reactions, which do not interfere with the objects of the invention and which may provide additional performance enhancements to the resulting product. For example, colorants, lubricants, release or transfer agents, surfactants, stabilizers, antifoams, and the like may be added to the processes of the present invention.

Further details and descriptions of the stable free radical polymerization process may be found in US-A-5,322,912.

Polymer resins possessing a discrete mixture of monomodal, that is a well defined multimodal, molecular weight distribution may in embodiments hereof provide several advantages, particularly, for example, for electrophotographic toner compositions. Such advantages include melt rheology properties including improved flow and elasticity, and improved performance properties such as triboelectrification, admix rates and shelf life stabilities.

The processes of the present invention can be selected to form a wide variety of polymers. For example, the processes can be used to polymerize a styrene monomer to form polystyrene or butadiene to form polybutadiene. The processes of the present invention can also be selected to polymerize a mixture of two or more different polymerizable monomers to form copolymers therefrom, for example, polymerization of styrene and butadiene to form poly(styrene-butadiene), styrene and isoprene to form poly(styrene-isoprene), styrene and acrylate to form poly(styrene-acrylate), styrene and methyl methacrylate to form poly(styrene-methyl methacrylate), and the like, and combinations thereof, including copolymers and terpolymers.

A suitable reaction medium employed for conducting processes of the instant invention may be selected from the group consisting of bulk or neat, suspension, emulsion, and solution systems.

In embodiments, there can be incorporated into the monomer a waxy component, such as alkylenes, like polyethylene, polypropylene waxes, and mixtures thereof having a low molecular weight of from about 1,000 to about 20,000. The use of such a component may be desirable for certain toner applications. Suitable low molecular weight waxes are disclosed in US-A-4,659,641.

Toner compositions can be prepared by a number of known methods, such as admixing and heating resin particles obtained with the processes of the instant invention such as styrene butadiene copolymers, pigment particles such as magnetite, carbon black, or mixtures thereof, and colorants such as cyan, yellow, magenta, green, brown, red, or mixtures thereof, and preferably from about 0.5 percent to about 5 percent of charge enhancing additives in a toner extrusion device, such as the ZSK53 available from Werner Pfleiderer, and removing the formed toner composition from the device. Subsequent to cooling, the toner composition may be subjected to grinding utilizing, for example, a Sturtevant micronizer for the purpose of achieving toner particles with a volume median diameter of less than about 25 microns, and preferably of from about 6 to about 12 microns, which diameters are determined by a Coulter Counter. Subsequently, the toner compositions can be classified utilizing, for example, a Donaldson Model B classifier for the purpose of removing toner fines, that is toner particles less than about 4 microns volume median diameter.

Illustrative examples of suitable toner resins selected for the toner and developer compositions of the present invention include polyamides; styrene acrylates; styrene methacrylates; styrene butadienes; vinyl resins, including homopolymers and copolymers of two or more vinyl monomers; vinyl monomers such as styrene, p-chlorostyrene, butadiene, isoprene, myrcene and the like; vinyl esters such as esters of monocarboxylic acids including methyl acrylate, ethyl acrylate, n-butyl acrylate, isobutyl acrylate, dodecyl acrylate, n-octyl acrylate, phenyl acrylate, methyl methacrylate, ethyl methacrylate, butyl methacrylate and the like; acrylonitrile, methacrylonitrile, and acrylamide; mixtures thereof and the like. Preferred toner resins include styrene butadiene copolymers, mixtures thereof, and the like. Other preferred toner resins include styrene/methacrylate copolymers; PLIOLITES®; and suspension polymerized styrene butadienes, such as those described in US-A- 4,558,108, the disclosure of which is totally incorporated herein by reference.

In toner compositions, the resin particles are present in a sufficient but effective amount, for example from about 70 to about 90 weight percent. Thus, when 1 percent by weight of the charge enhancing additive is present, and 10 percent by weight of pigment or colorant, such as carbon black, is contained therein, about 89 percent by weight of resin is selected. Also, the charge enhancing additive may be coated on the pigment particle. When used as a coating, the charge enhancing additive is present in an amount of from about 0.1 weight percent to about 5 weight percent, and preferably from about 0.3 weight percent to about 1 weight percent.

Numerous well known suitable pigments or dyes can be selected as the colorant for the toner particles including, for example, carbon black like REGAL 330™, nigrosine dye, aniline blue, magnetite, or mixtures thereof. The pigment, which is preferably carbon black, should be present in a sufficient amount to render the toner composition highly colored. Generally, the pigment particles are present in amounts of from about 1 percent by weight to about 20 percent by weight, and preferably from about 2 to about 10 weight percent based on the total weight of the toner composition; however, lesser or greater amounts of pigment particles can be selected as desired.

When the pigment particles are comprised of magnetites, thereby enabling single component toners in some instances, which magnetites are a mixture of iron oxides (FeO·Fe₂O₃) including those commercially available as Mapico Black, they are present in the toner composition in an amount of from about 10 percent by weight to about 70 percent by weight, and preferably in an amount of from about 10 percent by weight to about 50 percent by weight. Mixtures of carbon black and magnetite with from about 1 to about 15 weight percent of carbon black, and preferably from about 2 to about 6 weight percent of carbon black, and magnetite, such as MAPICO BLACK®, in an amount of, for example, from about 5 to about 60, and preferably from about 10 to about 50 weight percent, can be selected.

There can also be blended with the toner compositions of the present invention external additive particles including flow aid additives, which additives are usually present on the surface thereof. Examples of these additives include colloidal silicas, such as AEROSIL™, metal salts and metal salts of fatty acids inclusive of zinc stearate, aluminum oxides, cerium oxides, and mixtures thereof. When present, the additives are generally present in an amount of from about 0.1 percent by weight to about 5 percent by weight, and preferably in an amount of from about 0.1 percent by weight to about 1 percent by weight. Several of the aforementioned additives are illustrated in US-A-3,590,000 and US-A-3,800,588.

With further respect to the present invention, colloidal silicas, such as AEROSIL™, can be surface treated with the charge additives in an amount of from about 1 to about 30 weight percent and preferably about 10 weight percent followed by the addition thereof to the toner in an amount of from about 0.1 to about 10 and preferably from about 0.1 to about 1 weight percent.

Also, there can be included in the toner compositions low molecular weight waxes, such as polypropylenes and polyethylenes commercially available from Allied Chemical and Petrolite Corporation, EPOLENE N-15™ commercially available from Eastman Chemical Products, Inc., VISCOL 550-P™, a low weight average molecular weight polypropylene available from Sanyo Kasei K.K., and similar materials. The commercially available polyethylenes selected have a molecular weight of from about 1,000 to about 1,500, while the commercially available polypropylenes utilized for the toner compositions are believed to have a molecular weight of from about 4,000 to about 5,000. Many of the polyethylene and polypropylene compositions useful in the present invention are illustrated in GB-A-1,442,835.

The low molecular weight wax materials may be present in the toner composition or the polymer resin beads of the present invention in various amounts. However, these waxes may generally be present in the toner composition in an amount of from about 1 percent by weight to about 15 percent by weight, and preferably in an amount of from about 2 percent by weight to about 10 percent by weight and may in embodiments function as fuser roll release agents.

Encompassed within the scope of the present invention are colored toner and developer compositions comprised of toner resin particles, carrier particles, the charge enhancing additives illustrated herein, and as pigments or colorants, red, blue, green, brown, magenta, cyan and/or yellow particles, as well as mixtures thereof. More specifically, with regard to the generation of color images utilizing a developer composition with charge enhancing additives, illustrative examples of magenta materials that may be selected as pigments include, for example, 2,9-dimethyl-substituted quinacridone and anthraquinone dye identified in the Color Index as Cl 60710, Cl Dispersed Red 15, diazo dye identified in the Color Index as Cl 26050, Cl Solvent Red 19, and the like. Illustrative examples of cyan materials that may be used as pigments include copper tetra-4-(octadecyl sulfonamido) phthalocyanine, X-copper phthalocyanine pigment listed in the Color Index as Cl 74160, Cl Pigment Blue, Anthrathrene Blue identified in the Color Index as Cl 69810, Special Blue X?2137, and the like; while illustrative examples of yellow pigments that may be selected are diarylide yellow 3,3-dichlorobenzidene acetoacetanilides, a monoazo pigment identified in the Color Index as Cl 12700, Cl Solvent Yellow 16, a nitrophenyl amine sulfonamide identified in the Color Index as Foron Yellow SE/GLN, Cl Dispersed Yellow 33, 2,5-dimethoxy-4-sulfonanilide phenylazo-4'-chloro-2,5-dimethoxy acetoacetanilide, and Permanent Yellow FGL. The aforementioned pigments may be incorporated into the toner composition in various suitable effective amounts providing the objectives of the present invention are achieved. In one embodiment, these colored pigment particles are present in the toner composition in an amount of from about 2 percent by weight to about 15 percent by weight based on the weight of the toner resin particles.

For the formulation of developer compositions, there are mixed with the toner particles carrier components, particularly those that are capable of triboelectrically assuming an opposite polarity to that of the toner composition. Accordingly, the carrier particles may be selected to be of a negative polarity enabling the toner particles, which may be positively charged, to adhere to and surround the carrier particles. Illustrative examples of carrier particles include iron powder, steel, nickel, iron, ferrites, including copper zinc ferrites, and the like. Additionally, there can be selected as carrier particles nickel berry carriers as illustrated in US-A-3,847,604, the disclosure of which is totally incorporated herein by reference. The selected carrier particles can be used with or without a coating, the coating generally containing terpolymers of styrene, methylmethacrylate, and a silane, such as triethoxy silane, for example as described in US-A-3,526,533, US-A-4,937,166, and US-A-4,935,326. The coating may include, for example, KYNAR™ and polymethylmethacrylate mixtures (40/60). Coating weights can vary as indicated herein; generally, however, from about 0.3 to about 2, and preferably from about 0.5 to about 1.5 weight percent coating by weight may be selected.

Furthermore, the diameter of the carrier particles, preferably spherical in shape, may generally be from about 50 microns to about 1,000 microns, and in embodiments about 175 µm, thereby permitting them to possess sufficient density and inertia to avoid adherence to the electrostatic images during the development process. The carrier component can be mixed with the toner composition in various suitable combinations; however, best results are obtained when from about 1 to about 5 parts toner to from about 10 parts to about 200 parts by weight of carrier are selected.

The toner composition of the present invention can be prepared by a number of known methods as indicated herein including extrusion melt blending the toner resin particles, pigment particles or colorants, and a charge enhancing additive, followed by mechanical attrition. Other methods include those well known in the art such as spray drying, melt dispersion, and extrusion processing. Also, as indicated herein, the toner composition without the charge enhancing additive in the bulk toner can be prepared, followed by the addition of charge additive surface treated colloidal silicas.

The toner and developer compositions may be selected for use in electrostatographic imaging apparatuses containing therein conventional photoreceptors providing that they are capable of being charged positively or negatively. Thus, the toner and developer compositions can be used with layered photoreceptors that are capable of being charged negatively, such as those described in US-A-4,265,990. Illustrative examples of inorganic photoreceptors that may be selected for imaging and printing processes include, for example, selenium; selenium alloys, such as selenium arsenic, selenium tellurium and the like; halogen doped selenium substances; halogen doped selenium alloys; and the like.

The toner compositions are usually jetted and classified subsequent to preparation to enable toner particles with a preferred average diameter of from about 5 to about 25 µm, and more preferably from about 8 to about 12 µm. Also, the toner compositions preferably possess a triboelectric charge of from about 0.1 to about 2 femtocoulombs per µm as determined by the known charge spectrograph. Admix time for toners are preferably from about 5 seconds to about 1 minute, and more specifically from about 5 to about 15 seconds as determined by the known charge spectograph. These toner compositions with rapid admix characteristics enable, for example, the development of images in electrophotographic imaging apparatuses, which images have substantially no background deposits thereon, even at high toner dispensing rates in some instances, for instance exceeding 20 grams per minute. Further, such toner compositions can be selected for high speed electrophotographic apparatuses, that is those exceeding 70 copies per minute.

Also, the toner compositions prepared from resins of the present invention possess desirable narrow charge distributions, optimal charging triboelectric values, preferably of from about 10 to about 40, and more preferably from about 10 to about 35 microcoulombs per gram as determined by the known Faraday Cage methods with from about 0.1 to about 5 weight percent in one embodiment of the charge enhancing additive; and rapid admix charging times as determined in the charge spectrograph of less than 15 seconds. More preferably, in some embodiments of the present invention, the toner compositions have a rapid admix charging time of from about 1 to about 14 seconds.

The following Examples are being provided to further define various species of the present invention, it being noted that these Examples are intended to illustrate and not limit the scope of the present invention. Parts and percentages are by weight unless otherwise indicated. Comparative Examples are also provided.

### EXAMPLES

The polymerization reactions of the following Examples are conducted in a stirred 300 mL autoclave equipped with a sight glass. The agitator is a helical coil design and is turned at 78 rpm by gear reduction of an electric motor. Heating is provided by a modified Glascol mantle controlled by a Parr temperature controller. The carbon dioxide used is chromatography grade with a helium headspace and is pressurized by a Suprex syringe pump. Monomer addition is made by an Enerpac hand pump.

### Example 1

The autoclave is prepared and heated to 125°C and is pressure tested with carbon dioxide. The autoclave is pressurized with carbon dioxide to a pressure of 3,870 psi. 0.27 g of benzoyl peroxide is added to a solution of 0.23 g of TEMPO in 30 g of styrene (available from Fluka) immediately prior to addition of the solution to the hand pump. The styrene solution of benzoyl peroxide and TEMPO is then added to the autoclave via the hand pump. 0.33 g of perfluoroctanesulfonic acid, tetraethyl ammonium salt in 15 g of methanol is added to the autoclave with the hand pump, and a further 20 mL of methanol is used to flush the lines from the hand pump to the autoclave. The valve connecting the hand pump to the autoclave is then closed.

The reaction is maintained at about 125°C overnight, during which time the pressure does not drop. After 24 hours, heating of the autoclave is stopped and the autoclave is slowly cooled as the contents are extracted with additional carbon dioxide four times. About 11.9 g of liquid is recovered as extract. After about 2 hours, the vessel pressure is reduced to atmospheric and the temperature is about 50°C. The autoclave is opened and the contents are sampled. The sampling shows that the polymer has a residual of 14.4 weight% styrene, and GPC analysis shows the polymer has a Mₙ=1,675 and M_{w}=2,725, with a polydispersity of 1.62.

The autoclave is resealed and heating is commenced as the vessel is pressurized to 1,380 psi with carbon dioxide. Next, approximately 40 mL of isoprene is added to the autoclave via the hand pump. The autoclave pressure is then raised to about 4,000 psi as the temperature reaches 118°C. The autoclave is maintained at between 125°C and 131°C and pressures of between 4,200 psi and 4,350 psi for 44 hours. The carbon dioxide is then removed from the vessel and a white solid is recovered. GPC analysis shows the polymer has a Mₙ=2,189 and M_{w}=4,208, with a polydispersity of 1.92. Nuclear magnetic resonance analysis of the polymer indicates that an isoprene block has been extended from the styrene block. Moreover, analysis of the TEMPO end groups by NMR indicates that they all reside on an isoprene moiety and not on styrene.

### Example 2

The autoclave is sealed and pressurized to 1,500 psi with carbon dioxide while heating and stirring. At 127°C, the carbon dioxide is vented. 1.27 g of benzoyl peroxide, 0.81 g of dodecylbenzene sulfonic acid and 1.07 g of TEMPO are added to 140 g of styrene to form a solution immediately prior to addition of the solution to the hand pump. The styrene solution is then added to the autoclave via the hand pump and the valve connecting the hand pump to the autoclave is then closed. The vessel is then repressurized to about 3,900 psi.

The autoclave is maintained at between 128°C and 141°C for about 6 hours and then allowed to cool overnight. The following morning, the still liquid mixture is heated with stirring to about 135°C. This set point is maintained with the same temperature fluctuation as the previous heating step. After about 2.4 hours at temperature, extraction of the unreacted styrene is begun by venting the carbon dioxide down to 1,100 psi, with the results shown in the following table:

| Vent Step | Styrene Recovered (g) |
|---|---|
| 1 | 7.5 |
| 2 | 4.0 |
| 3 | 2.4 |
| 4 | 2.1 |
| 5 | 2.0 |
| 6 (to ATM) | 0.8 |

The extraction (venting) takes place over the course of 110 minutes; generally about 7 minutes are required to drop the pressure, about 4 minutes to repressurize, and about 10-15 minutes between cycles allowing the styrene monomer to migrate into the supercritical carbon dioxide. The last venting step reduces the pressure to atmospheric pressure. After the vessel is repressurized, the polymerization is continued for a further 110 minutes and then the autoclave is cooled.

Upon releasing the pressure at 100°C, the polymer, which had been a low viscosity liquid swollen by carbon dioxide, expands and wraps around the stirrer. Because the stirrer begins to slip at the magnetic coupling, it must be shut down. This occurrence is significant because it illustrates that without the presence of supercritical carbon dioxide, the molten polymer is beyond the processing capability of this reactor system.

The polymer is analyzed by GPC and found to have a Mn=19,000, Mw=24,900, and polydispersity of 1.3. TGA gives a crude conversion of about 81% after 12 hours of polymerization. Example 3

Prior to sealing the autoclave, all of the reactants are added to the autoclave. The reactants include 1.27 g of benzoyl peroxide, 1.07 g of TEMPO, 0.58 g camphorsulfonic acid, and 140 g of styrene. The reactants are therefore present in the reaction during the initial heating period. The autoclave is then sealed, pressurized with supercritical carbon dioxide and is maintained at the reaction temperature of around 135°C and the pressures of Example 2 for about 4 hours. After the 4 hours, a sample is taken of the thick liquid reactor contents and analyzed by GPC and TGA. The polymer is isolated by precipitation in methanol and analyzed. The polymer is found to have a Mₙ=11,900, M_{w}=13,800, and polydispersity of 1.15. TGA results combined with supercritical phase sampling shows a monomer to polymer conversion of 43%.

Further polymerization for 4.5 hours above 130°C gives a "foamy" material. The material is removed at 130°C through the bottom port of the autoclave. Conversion calculations based on TGA and sampling recoveries shows a conversion rate of 86% after 8.5 hours of reacting. GPC analysis of the polymer shows Mₙ=18,900, M_{w}=25,400, and polydispersity of 1.34.

Images may be developed in a xerographic imaging test fixture with a negatively charged layered imaging member comprised of a supporting substrate of aluminum, a photogenerating layer of trigonal selenium, and a charge transport layer of the aryl amine N,N'-diphenyl-N,N'-bis(3-methylphenyl)1,1'-biphenyl-4,4'-diamine, 45 weight percent, dispersed in 55 weight percent of the polycarbonate MAKROLON®, as described in US-A-4,265,990. Images from toner compositions prepared from the polymers derived from, for example, Example 2 are expected to be of excellent quality with no background deposits and of high resolution over an extended number of imaging cycles exceeding, it is believed, about 75,000 imaging cycles.

Other toner compositions may be readily prepared by conventional means from the polymer and copolymer resins of the present invention including colored toners, single component toners, multi-component toners, toners containing special performance additives, and the like.

The aforementioned stable free radical agent moderated polymerization process may be applied to a wide range of organic monomers to provide novel toner resin materials with desirable electrophotographic properties. For example, the block copolymers have application as dispersants for photoreceptor pigments. The multimodal resins have application to low melt resins and certain monomodal resins may be used to modify the surface of carbon black and pigment particles to make the pigment particles more miscible with a host polymer or dispersing medium. Narrow molecular weight resins such as poly(styrene-butadiene) find application as improved toner resins for general application.

Other modifications of the present invention may occur to those skilled in the art based upon a review of the present application and these modifications, including equivalents thereof, are intended to be included within the scope of the present invention.

## Claims

1. A free radical polymerization process for the preparation of thermoplastic resin or resins comprising:
heating a mixture of a free radical initiator, a stable free radical agent, and at least one polymerizable monomer compound;
adding under pressure a non-polymerisable supercritical fluid;
polymerizing said polymerizable monomer to form said thermoplastic resin or resins with a high monomer to polymer conversion;
cooling said mixture;
optionally isolating said thermoplastic resin; and
optionally washing and drying said thermoplastic resin.

2. A process in accordance with claim 1, wherein the supercritical fluid (A) is added in a sufficient amount to provide a pressure of from about 1,000 psi to about 6,000 psi, and/or (B) is selected from the group consisting of carbon dioxide, nitrous oxide and low molecular weight alkanes.

3. A process in accordance with claim 1 or 2, wherein the heating is from about 1 to 60 hours, and preferably at from about 120°C to 160°C.

4. A process in accordance with claim 1, 2 or 3, wherein the thermoplastic resin product has a polydispersity of from about 1.1 to about 2.0, and more preferably from about 1.2 to about 1.5.

5. A process in accordance with any of the preceding claims, wherein said free radical initiator is selected from the group consisting of organic peroxides, azobisalkylnitriles, peroxycarbonates, and mixtures thereof.

6. A process in accordance with any of the preceding claims, wherein the stable free radical agent is comprised of (A) a nitroxide stable free radical, or (B) at least one nitroxide stable free radical selected from the group consisting of 2,2,5,5-tetramethyl-1-pyrrolidinyloxy, derivatives thereof, 2,2,6,6-tetramethyl-1-piperidinyloxy, derivatives thereof, and mixtures thereof.

7. A process in accordance with any of the preceding claims, further comprising (A) adding at least one of an organic sulfonic, organic phosphoric or organic carboxylic acid during heating of said mixture thereby increasing the rate of formation of said thermoplastic resin or resins from said polymerization of said monomer compound and/or (B) adding a tertiary amine promoter compound to said mixture thereby increasing the rate of dissociation of said free radical initiator and where said free radical initiator is an organic peroxide.

8. A process in accordance with any of the preceding claims, further comprising extracting unreacted said polymerizable monomer compound from said mixture by removing said supercritical fluid.

9. A free radical polymerization process for the preparation of thermoplastic resin or resins comprising heating at from about 60°C to about 160°C a mixture comprised of a free radical initiator, a stable free radical agent, at least one polymerizable monomer compound and a non-polymerisable supercritical fluid to form said thermoplastic resin or resins with a narrow polydispersity of from about 1.1 to about 2.0 and a monomer to polymer conversion of greater than about 50%.

10. A free radical polymerization process for the preparation of thermoplastic resin or resins comprising:
heating a first mixture comprised of a free radical initiator, a stable free radical agent, and a first at least one polymerizable monomer compound;
adding under pressure non-polymerisable supercritical carbon dioxide;
polymerizing said first polymerizable monomer to form a first intermediate product resin;
extracting unreacted said first polymerizable monomer compound from said first mixture;
optionally cooling said first intermediate product resin;
adding to said first intermediate product resin a second mixture comprised of a free radical initiator, a stable free radical agent, and a second at least one polymerizable monomer compound, wherein said polymerizable monomer compound of said second mixture contains the same components as said polymerizable monomer compound of said first mixture, and said free radical initiator and said stable free radical agent of said second mixture are the same or different from said free radical initiator and said stable free radical agent of said first mixture, and wherein there is formed a combined mixture;
adding under pressure supercritical carbon dioxide;
heating said combined mixture to form a third mixture comprised of a mixture of thermoplastic resins comprised of a first product resin formed from said first intermediate product resin and added said second monomer and a second product resin formed from said second monomer;
extracting unreacted said second polymerizable monomer compound from said third mixture;
cooling said third mixture;
optionally isolating said mixture of thermoplastic product resin from said third mixture; and
optionally washing and drying said mixture of thermoplastic resins and wherein said first product resin and said second product resin each possess a narrow polydispersity.
